(19) Europäisches Patentamt
European Patent Office
Office européen des brevets

(11) EP 2 141 036 A1

(12) DEMANDE DE BREVET EUROPEEN

(43) Date de publication:
06.01.2010 Bulletin 2010/01

(51) Int Cl.:
B60G 17/016 (2006.01)     B60G 17/0195 (2006.01)
B60G 21/00 (2006.01)      B60W 10/22 (2006.01)
B60W 10/18 (2006.01)      B60W 10/04 (2006.01)

(21) Numéro de dépôt: 09305643.0

(22) Date de dépôt: 03.07.2009

(84) Etats contractants désignés:
AT BE BG CH CY CZ DE DK EE ES FI FR GB GR
HR HU IE IS IT LI LT LU LV MC MK MT NL NO PL
PT RO SE SI SK SM TR

(30) Priorité: 03.07.2008 FR 0854541

(71) Demandeur: Renault
92109 Boulogne Billancourt (FR)

(72) Inventeurs:
• Pothin, Richard
78760, JOUARS-PONCHARTRAIN (FR)
• Lorimier, Lionel
78180, MONTIGNY LE BRETONNEUX (FR)
• Lucea, Marc
92100, BOULOGNE-BILLANCOURT (FR)

(54) **Procédé et système de correction du roulis d'un véhicule automobile**

(57) L'invention concerne un système de correction du roulis d'un véhicule automobile équipé d'un organe d'anti-roulis actif (12) associé à au moins un train du véhicule.

Selon l'invention, le système comprend :
■ des moyens (24) de surveillance de l'occurrence d'une décélération dans un virage sans survirage du véhicule ;

et
■ des moyens (30) d'asservissement de la vitesse de lacet du véhicule sur une vitesse de lacet de référence par commande du système anti-roulis afin de prévenir l'apparition d'un survirage, lesdits moyens d'asservissement étant activés en cas d'occurrence d'une telle décélération.

Fig. 1

EP 2 141 036 A1

**EP 2 141 036 A1**

**Description**

**DOMAINE DE L'INVENTION**

L'invention a trait au domaine de la correction du roulis d'un véhicule automobile équipé d'un système d'anti-roulis actif sur son train avant et/ou arrière.

**ETAT DE LA TECHNIQUE**

Un véhicule est usuellement conçu pour adopter un comportement le plus stable possible quelque soit la sollicitation du conducteur ou l'état de la chaussée. Ainsi par exemple, certains véhicules sont équipés d'un système d'anti-blocage de roues, de contrôle de trajectoire ou d'anti-roulis.
Un système d'anti-roulis de l'état de la technique, comme celui décrit par exemple dans le document US-A-5 948 027 comprend des barres anti-roulis associés au train avant et/ou au train arrière du véhicule. Ce système vise à optimiser la réponse en lacet du véhicule suite à la prise de virage de celui-ci afin de corriger une situation de survirage.
On observe cependant qu'un tel système agit une fois la situation de survirage établie et est dans l'incapacité d'anticiper la survenue d'une telle situation. Or, plus un survirage est détecté tardivement, plus il est difficile pour le système d'anti-roulis de le corriger. De même, anticiper un survirage permet de mettre en oeuvre des mesures pour éviter sa survenue effective et ainsi garantir un niveau de sécurité optimale.

**EXPOSE DE L'INVENTION**

Le but de la présente invention est de proposer un procédé de correction du roulis d'un véhicule automobile équipé d'un système d'anti-roulis qui génère une action préventive vis-à-vis de la survenue d'un survirage.
A cet effet, la présente invention a pour objet un procédé de correction du roulis d'un véhicule automobile équipé d'un organe d'anti-roulis actif associé à au moins un train du véhicule, qui, selon l'invention, comprend :

■ la surveillance de l'occurrence d'une décélération dans un virage sans survirage du véhicule ; et
■ en cas d'occurrence d'une telle décélération, l'asservissement de la vitesse de lacet du véhicule sur une vitesse de lacet de référence par commande de l'organe anti-roulis afin de prévenir l'apparition d'un survirage.

En d'autres termes, lorsque le véhicule décélère dans un virage, par exemple consécutivement à un lever de pied de conducteur sur la pédale d'accélérateur et/ou l'application d'une pression sur la pédale de freinage du véhicule par le conducteur, il existe une situation propice à l'occurrence d'un survirage. Afin d'éviter qu'une telle situation ne survienne, un asservissement de la vitesse de lacet du véhicule sur une vitesse de référence est mise en oeuvre au moyen des organes d'anti-roulis. Une action préventive est ainsi menée, minimisant les risques de survenue d'un survirage.
De préférence, la vitesse de référence utilisée est déterminée par le concepteur en fonction de diverses informations, comme par exemple la vitesse longitudinale du véhicule, l'angle de braquage des roues, l'adhérence des pneumatiques des roues du véhicule ou autres, afin de limiter le roulis sans que cela ne soit perceptible par le conducteur pour des raisons d'agrément de conduite.
Selon des modes de réalisation particuliers de l'invention, le procédé comporte au moins l'une des caractéristiques suivantes :

- la surveillance de l'occurrence de la décélération dans un virage sans survirage comporte la détection d'un lever de pied de la pédale d'accélérateur du véhicule et/ou la détection d'une application d'un freinage léger ;
- la surveillance de l'occurrence de décélération dans un virage sans survirage est confirmée lorsque la vitesse longitudinale du véhicule est supérieure à un seuil prédéterminé ;
- consécutivement à la détection de la décélération dans un virage sans survirage, une vitesse de lacet nominale est déterminée à partir d'un modèle de comportement latéral du véhicule en situation de roulage sans roulis, et la vitesse de lacet de référence est déterminée en limitant la vitesse de lacet nominale de manière à ce que la valeur absolue de celle-ci soit inférieure à la valeur absolue à la vitesse de lacet réelle du véhicule ;
- l'asservissement de la vitesse de lacet comporte le calcul d'un premier coefficient de report de charge et le calcul d'un second coefficient de report de charge par la limitation du premier coefficient à une gamme de valeur correspondant à un sous-virage du véhicule ;
- l'asservissement de la vitesse de lacet est initialisé par un coefficient de report de charge à erreur nulle ; et
- il comporte :

2

■ la surveillance de l'occurrence d'un survirage du véhicule ; et
■ dans le cas d'un survirage, l'inactivation de l'asservissement de la vitesse de lacet au moyen de l'organe d'anti-roulis et l'application d'une répartition maximale de la charge sur le train avant.

L'invention a également pour objet un système de correction du roulis d'un véhicule automobile équipé d'un organe d'anti-roulis actif associé à au moins un train du véhicule, qui, selon l'invention, comprend :

■ des moyens de surveillance de l'occurrence d'une décélération dans un virage sans survirage du véhicule ; et
■ des moyens d'asservissement de la vitesse de lacet du véhicule sur une vitesse de lacet de référence par commande de l'organe d'anti-roulis afin de prévenir l'apparition d'un survirage, lesdits moyens d'asservissement étant activés en cas d'occurrence d'une telle décélération.

En d'autres termes, ce système met en oeuvre le procédé susmentionné.
Par « lever de pied ou freinage léger », on entend ici un lever de pied ou un freinage impliquant une décélération suffisante pour générer un report de charge qui déstabilise le véhicule. La quantification de ce phénomène dépend du véhicule considéré.

## BREVE DESCRIPTION DES FIGURES

L'invention sera mieux comprise à la lecture de la description qui va suivre, donnée uniquement à titre d'exemple, et faite en relation avec les dessins annexés, dans lesquels :

- la figure 1 est une vue schématique d'un système anti-roulis selon l'invention ;
- la figure 2 est une vue schématique d'un module de détection de lever de pied ou de freinage léger en virage, entrant dans la constitution du système de la figure 1 ;
- la figure 3 est une vue schématique du procédé de supervision de stratégie de correction de roulis mis en oeuvre par le superviseur entrant dans la constitution du système de la figure 1 ; et
- la figure 4 est une vue schématique du module d'asservissement de la vitesse de lacet du véhicule, entrant dans la constitution du système de la figure 1.

## DESCRIPTION DETAILLEE DE L'INVENTION

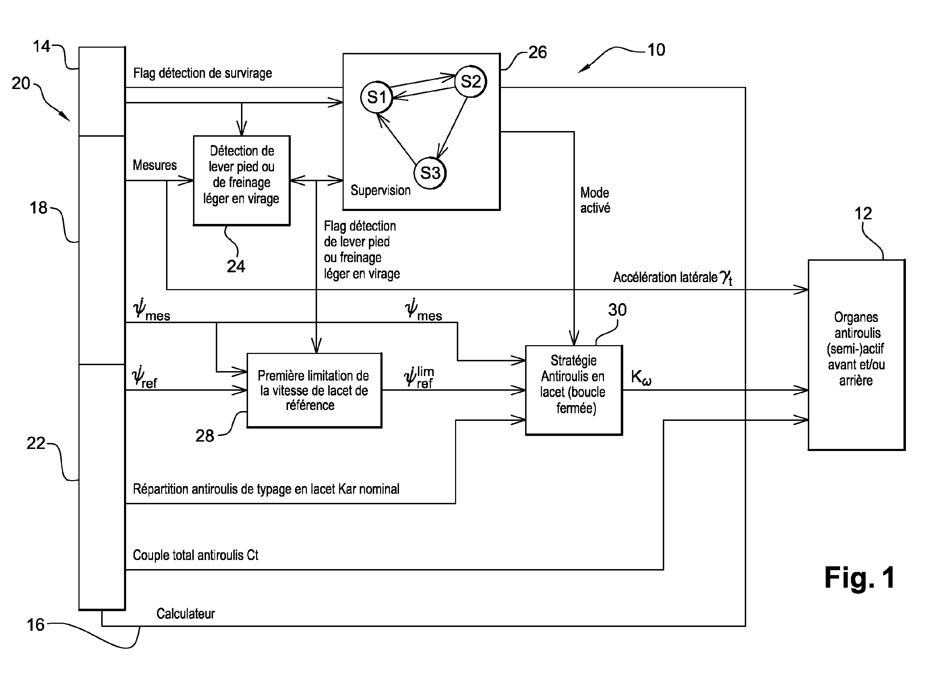

Sur la figure 1, il est représenté de manière schématique, sous la référence générale **10,** un système actif de correction du roulis d'un véhicule automobile équipé de trains avant et arrière et d'un système actif de freinage.
Chacun des trains avant et arrière du véhicule est équipé d'un organe anti-roulis piloté **12** comprenant une barre anti-roulis fixées au châssis du véhicule et connectée aux suspensions des roues droite et gauche du train. La barre anti-roulis applique un moment sur le châssis du véhicule visant à compenser une différence d'orientation et/ou de hauteur desdites roues vis-à-vis du châssis. Les organes anti-roulis **12** comprennent également un circuit hydraulique piloté électroniquement associé à la barre anti-roulis pour régler l'amplitude du moment appliqué par celle-ci sur le châssis.
Comme cela est connu en soi, les organes anti-roulis **12** appliquent un couple total anti-roulis sur le châssis du véhicule en fonction de l'accélération latérale $\gamma_l$ de celui-ci, d'une consigne de couple anti-roulis total $C_t$ à appliquer au châssis, et d'un coefficient de report de charge $K_{ar}$ égal au ratio du couple anti-roulis appliqué sur le train arrière sur le couple anti-roulis total $C_t$. Le coefficient de report de charge $K_{ar}$ règle donc la répartition du couple anti-roulis total entre le train avant et le train arrière du véhicule.
Plus particulièrement, les couples à appliquer aux trains avant et arrière sont donnés respectivement par les relations :

$$C_{av} = (1 - K_{ar}^{passif}) \times C_t + (K_{ar} - K_{ar}^{passif}) \times M \times h \times \gamma_t$$

$$C_{ar} = K_{ar}^{passif} \times C_t + (K_{ar} - K_{ar}^{passif}) \times M \times h \times \gamma_t$$

où :

- ■ $C_{av}$ et $C_{ar}$ sont les couples à appliquer aux trains avant et arrière respectivement ;
- ■ M est la masse du véhicule ;
- ■ h est la hauteur du centre de gravité du véhicule par rapport au sol ; et

- ■ $K_{ar}^{passif}$ est un coefficient de report prédéterminé correspondant à un véhicule passif non équipé de système anti-roulis.

Les organes anti-roulis actifs **12** sont classiques et ne seront donc pas expliqués plus en détail par la suite pour des raisons de concision.

Le système **10** de correction du roulis comporte également un module **14** d'entrée délivrant diverses mesures et informations utiles à la correction du roulis, ainsi qu'une unité **16** de traitement d'informations, connectée au module **14** d'entrée et calculant en fonction des données délivrées par celui-ci le coefficient de report de charge $K_{ar}$.

Plus particulièrement, le module **14** d'entrée comporte un bloc **18** de mesure comprenant :

- ■ un capteur mesurant la vitesse de lacet $\dot{\psi}$ du véhicule ;
- ■ un capteur mesurant l'accélération latérale $\gamma_t$ du véhicule ;
- ■ un capteur mesurant la vitesse longitudinale $v_x$ du véhicule, ou tout autre moyen apte à déterminer celle-ci comme par exemple un estimateur mis en oeuvre par un système d'anti-blocage de roue en fonction des mesures de vitesses angulaires des roues du véhicule, comme cela est connu en soi ;
- ■ un capteur mesurant la position $\rho_a$ ou le pourcentage d'enfoncement de la pédale d'accélérateur du véhicule, ou tout autre moyen apte à déterminer celle-ci comme par exemple un estimateur calculant ladite position en fonction de l'ouverture du papillon des gaz et du couple moteur ;
- ■ un capteur mesurant la position $\rho_f$ ou le pourcentage d'enfoncement de la pédale de frein du véhicule, ou tout autre moyen apte à déterminer celle-ci, par exemple à partie de la mesure de la pression du maître cylindre du système de freinage ;
- ■ un capteur mesurant l'angle de braquage $\alpha_1$ des roues avant du véhicule, ou tout autre moyen apte à déterminer celui-ci, par exemple en fonction de l'angle du volant du véhicule ;
- ■ un capteur mesurant l'angle de braquage $\alpha_2$ des roues arrière du véhicule, ou tout autre moyen apte à déterminer celui-ci ; et
- ■ un capteur mesurant le moment de lacet M dû au freinage du véhicule, ou tout autre moyen apte à déterminer celui-ci. Le module **14** d'entrée comporte également un bloc **20** surveillant la survenue d'un survirage du véhicule en fonction de mesures délivrées par le bloc **18** de mesure.

Plus particulièrement, le bloc **20** met en oeuvre un observateur linéaire du vecteur d'état d'un modèle, dit « modèle sans ballant à deux roues », du comportement latéral du véhicule soumis à une perturbation additive *d* sur la vitesse de lacet $\dot{\psi}$ du véhicule, ci-après 1' «estimateur », selon les relations :

$$\begin{pmatrix} \dot{\hat{\psi}}(t) \\ \dot{\hat{\beta}}(t) \\ \dot{\hat{M}}_f(t) \\ \dot{\hat{d}}(t) \end{pmatrix} = \begin{pmatrix} -\dfrac{D_1 L_1^2 + D_2 L_2^2}{v_x I_z} & \dfrac{D_2 L_2 - D_1 L_1}{I_z} & 0 & 0 \\ -1 + \dfrac{D_2 L_2 - D_1 L_1}{M v_x^2} & -\dfrac{D_1 + D_2}{M v_x} & 0 & 0 \\ 0 & 0 & -\dfrac{1}{\tau} & 0 \\ 0 & 0 & 0 & 0 \end{pmatrix} \begin{pmatrix} \hat{\psi}(t) \\ \hat{\beta}(t) \\ \hat{M}_f(t) \\ \hat{d}(t) \end{pmatrix} + \begin{pmatrix} 0 \\ 0 \\ -\dfrac{1}{\tau} \\ 0 \end{pmatrix} M(t) + \dots$$

$$\dots + \begin{pmatrix} \dfrac{D_1 L_1}{I_z} \\ \dfrac{D_1}{M v_x} \\ 0 \\ 0 \end{pmatrix} \alpha_1(t) + \begin{pmatrix} -\dfrac{D_2 L_2}{I_z} \\ \dfrac{D_2}{M v_x} \\ 0 \\ 0 \end{pmatrix} \alpha_2(t) + K(v_x)\left(\dot{\psi}_{mes}(t) - \hat{y}(t)\right)$$

$$\hat{y}(t) = \begin{pmatrix} 1 & 0 & 0 & 1 \end{pmatrix} \begin{pmatrix} \hat{\psi}(t) \\ \hat{\beta}(t) \\ \hat{M}_f(t) \\ \hat{d}(t) \end{pmatrix}$$

où :

■ le symbole « ^ » signifie une valeur estimée ;

■ t est le temps ;

■ $\dot{\psi}_{mes}$ est la mesure de la vitesse de lacet $\dot{\psi}$ ;

■ $D_1$ est la rigidité de dérive des pneumatiques des roues avant du véhicule ;

■ $D_2$ est la rigidité de dérive des roues arrière du véhicule ;

■ $I_Z$ est le moment d'inertie vertical du véhicule, c'est-à-dire l'inertie du véhicule autour d'un axe vertical passant par le centre de gravité de celui-ci ;

■ $L_1$ est une valeur prédéterminée de la distance du centre de gravité du véhicule à l'essieu avant de celui-ci ;

■ $L_2$ est une valeur prédéterminée de la distance du centre de gravité du véhicule à l'essieu arrière de celui-ci ;

■ β est un angle de dérive du véhicule modélisé, c'est-à-dire l'angle que fait le vecteur de la vitesse du véhicule avec un axe longitudinal de celui-ci ;

■ $M_f$ représente le moment de lacet dû au freinage tel que mesuré par un capteur modélisé par un premier ordre de constance de temps τ prédéterminée ; et

■ $K(v_x)$ est le gain de l'estimateur dépendant de vitesse longitudinale $v_x$ du véhicule, ce gain étant par exemple tabulée dans une table sélectionnée, ou interpolée, en fonction de ladite vitesse $v_x$.

Le bloc **20** surveille l'amplitude de la perturbation estimée d et détecte l'occurrence d'un survirage lorsque la valeur absolue de celle-ci est supérieure à une valeur de seuil prédéterminée, de préférence de l'ordre de 0,1 rad/s. Le bloc **20** émet alors un drapeau « Flag_detection_survirage » de valeur égale à « 1 ».

Le module **14** d'entrée comporte également un bloc **22** de détermination de paramètres pour le calcul du coefficient de report $K_{ar}$, à savoir :

■ une vitesse de lacet de référence $\dot{\psi}_{ref}$. La vitesse $\dot{\psi}_{ref}$ est par exemple calculée à partir d'un modèle à deux roues sans ballant décrivant le comportement latéral du véhicule en situation conventionnelle, c'est-à-dire sans roulis ;

■ un coefficient de report de charge nominal $K_{ar\_nom}$ ; et

■ un couple anti-roulis total $C_t$ qui est la somme des couples avant et arrière à appliquer pour maintenir la caisse en roulis. L'unité de traitement d'informations **10** comprend quant à elle un module **24** de détection d'une décélération du véhicule dans un virage, et plus particulièrement d'un lever de pied de la pédale d'accélérateur et/ou d'un freinage léger dans un virage, comme cela sera expliqué plus en détails par la suite.

L'unité **10** comprend également un superviseur **26,** connecté au module **24** et activant une stratégie appropriée de correction du roulis en fonction de l'état de roulage du véhicule, et plus particulièrement du résultat de la détection du module **24.** L'unité **10** comporte en outre un module **28** de limitation de la vitesse de lacet de référence $\dot{\psi}_{ref}$, et un module **30** de calcul du coefficient de report de charge $K_{ar}$ devant être appliqué par les organes anti-roulis **12,** comme cela sera expliqué plus en détail par la suite.

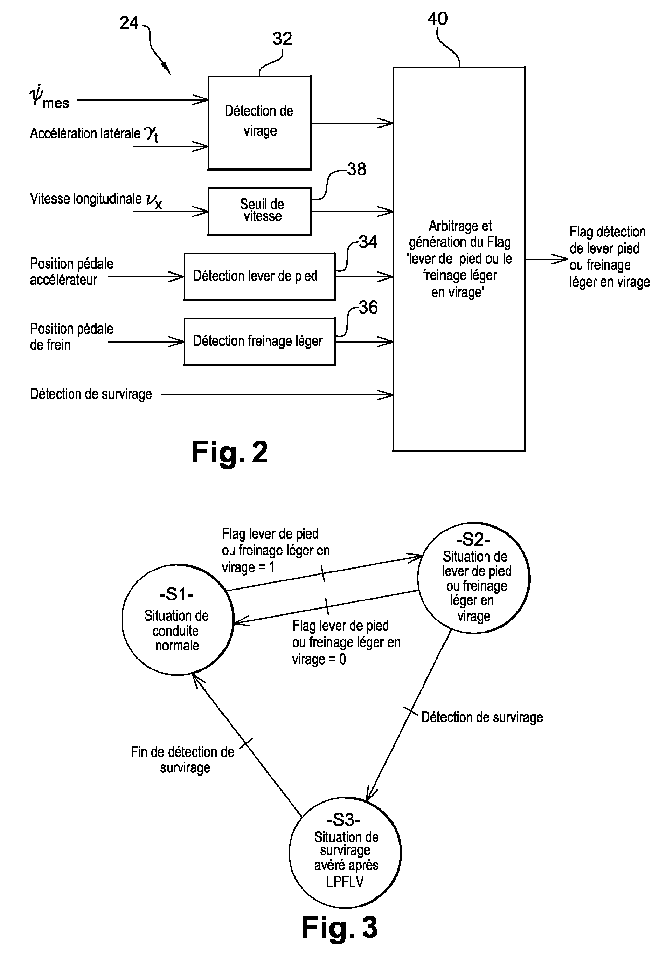

La figure 2 est une vue schématique plus en détails du module **24** de détection d'une décélération du véhicule dans un virage.

Le module **24** comprend un bloc **32** de détection de virage recevant en entrée la vitesse de lacet $\dot{\psi}_{mes}$ et l'accélération latérale $\gamma_{t\_mes}$ mesurées. Le bloc **32** applique tout d'abord un filtrage du type passe-bas à la vitesse $\dot{\psi}_{mes}$ et à l'accélération $\gamma_{t\_mes}$ afin de moyenner celles-ci. Ensuite, le bloc **32** détecte une prise de virage du véhicule si la vitesse de lacet filtrée $\dot{\psi}_f$ est supérieure en valeur absolue à un seuil prédéterminé de vitesse $\dot{\psi}_{min}$ et si l'accélération latérale filtrée $\gamma_{tf}$ est supérieur en valeur absolue à un seuil prédéterminé d'accélération $\gamma_{t\,min}$. Les seuils $\dot{\psi}_{min}$ et $\gamma_{t\,min}$ sont déterminés par le concepteur du système et sont de préférence fonction d'informations relatives à la dynamique du véhicule comme par exemple la vitesse de celui-ci.

Le module **24** comprend également un bloc **34** de détection d'un lever de pied de la pédale d'accélérateur de la part du conducteur en fonction de la position $\rho_a$ mesurée de cette pédale. Le bloc **34** applique en premier lieu une dérivation et un filtrage du type passe bas à la position $\rho_a$ mesurée, une vitesse de lever de pied étant ainsi obtenue. Le bloc **34** détecte ensuite un lever de pied si, pendant un intervalle de temps prédéterminé supérieur à la constante de temps du filtrage du type passe-bas, la position $\rho_a$ est supérieure à un seuil prédéterminé de position $\rho_{a\,min}$ et si la vitesse de lever de pied est supérieure à un seuil prédéterminé de vitesse $\dot{\rho}_{a\,min}$. Les seuils $\rho_{a\,min}$ et $\dot{\rho}_{a\,min}$ sont déterminés par le concepteur du système et sont de préférence fonction d'informations relatives à la dynamique du véhicule comme par exemple la vitesse de celui-ci.

Le module **24** comporte en outre un bloc **36** de détection d'un freinage léger du véhicule en fonction de la position de la pédale de frein $\rho_f$ mesurée. Le bloc **36** applique à celle-ci une dérivation et un filtrage de type passe bas, une vitesse d'application du freinage étant ainsi obtenue. Le bloc **36** détecte alors un freinage léger de la part du conducteur si, pendant un intervalle de temps prédéterminé supérieur à la constante de temps du filtrage passe-bas, la position $\rho_f$ mesurée est comprise dans une plage prédéterminée de positions $\lfloor\rho_{f\,min}\,;\rho_{f\,max}\rceil$ et si la vitesse d'application du freinage est supérieure un seuil prédéterminé de vitesse $\dot{\rho}_{f\,min}$. Le seuil $\rho_{f\,min}$ détermine l'apparition d'un freinage alors que le seuil $\rho_{f\,max}$ détermine la limite quantifiant un freinage léger. L'utilisation de la vitesse d'application du freinage permet quant à elle de valider la détection du freinage léger. Les seuils $\rho_{f\,min}$, $\rho_{f\,max}$ et $\dot{\rho}_{f\,min}$ sont déterminés par le concepteur du système et sont de préférence fonction d'informations relatives à la dynamique du véhicule comme par exemple la vitesse de celui-ci.

Le module **24** comporte également un bloc **38** produisant une sortie égale à « 1 » lorsque la vitesse longitudinale du véhicule $v_x$ est supérieure à un seuil prédéterminé de vitesse $v_{x\,min}$, et une sortie nulle sinon.

Enfin, le module **24** comporte un bloc **40** d'arbitrage connecté aux blocs **32, 34, 36** et **38** et déterminant en fonction des sorties de ceux-ci la valeur d'un drapeau « flag_lever_de pied_ou_freinage_léger_en_virage ». Plus particulièrement, le bloc **40** d'arbitrage bascule la valeur de ce drapeau de « 0 » à « 1 » lorsqu'il y a détection d'un lever de pied ou d'un freinage léger combiné à une détection de prise de virage par le véhicule et à un dépassement du seuil $v_{x\,min}$ par la vitesse longitudinale $v_x$ du véhicule.

Par ailleurs, une fois le drapeau « flag_lever_de pied_ou_freinage_léger_en_virage » ayant basculé sur la valeur « 1 », le bloc **40** d'arbitrage maintient le drapeau à cette valeur pendant une durée prédéterminée $T_r$ et cela même si les conditions ayant mené au basculement à « 1 » ne sont plus satisfaites. La durée $T_r$ est déterminée par le concepteur du système et est de préférence fonction d'informations relatives à la dynamique du véhicule comme par exemple la vitesse de celui-ci. Le maintien du drapeau « flag_lever_de pied_ou_freinage_léger_en_virage » joue le rôle d'hystérésis, évitant ainsi des oscillations inopportunes de la valeur de ce drapeau.

Le bloc **40** d'arbitrage bascule cependant le drapeau « flag_lever_de pied_ou_freinage_léger_en_virage » sur la valeur nulle avant la fin de la durée $T_r$ si un survirage a été détecté (Flag_detection_survirage = 1), et cela dès que le superviseur **26** se trouve dans l'état « S3 » décrit ci-après.

Le système **10** de correction du roulis adopte plusieurs modes de fonctionnement en fonction des conditions de roulage du véhicule. L'activation/désactivation de ces modes de fonctionnement est réalisée sous les ordres du superviseur **26** formant machine d'état.

La figure 3 illustre les états et les transitions entre états mis en oeuvre par le superviseur **26.** Le système de correction du roulis du véhicule présente trois modes de fonctionnement, associés respectivement à des états « S1 », « S2 » et « S3 » du superviseur **26.** Le superviseur **26** émet un drapeau « mode_activé » prenant la valeur « 1 » lorsque l'état « S1 » est actif, la valeur « 2 » lorsque l'état « S2 » est actif et la valeur « 3 » lorsque l'état « S3 » est actif.

L'état « S1 » correspond à une situation de conduite normale du véhicule, ce dernier présentant éventuellement un roulis qu'il n'est pas nécessaire de corriger car ne présentant aucun danger. Dans l'état « S1 », les drapeaux « Flag_detection_survirage » et « flag_lever_de pied_ou_freinage_léger_en_virage » sont tous deux réglés sur « 0 ».

Dans l'état « S1 », une correction du roulis que présente éventuellement le véhicule peut toutefois être mise en oeuvre pour des raisons d'agrément de conduite. Dans ce cas, un coefficient de report nominal prédéterminé $K_{ar\_nom}$ est utilisé par les organes anti-roulis **12,** le coefficient $K_{ar\_nom}$ étant choisi par le concepteur du système en fonction de divers critères d'agrément de conduite. Ce coefficient est notamment choisi pour perturber au minimum le conducteur et rendre ainsi transparente pour ce dernier la correction du roulis.

Par ailleurs, lors d'une situation de conduite normale du véhicule, le système de freinage actif du véhicule n'est pas utilisé.

L'état « S2 » correspond quant à lui à une situation de conduite au cours de laquelle le véhicule prend un virage alors que le conducteur effectue un lever de pied de la pédale d'accélérateur et/ou applique un freinage léger, sans par ailleurs qu'un survirage du véhicule n'ait été détectée. Dans l'état « S2 », le drapeau « Flag_detection_survirage » vaut « 1 » et le drapeau « flag_lever_de pied_ou_freinage_léger_en_virage » vaut « 0 ».

Le type de situations rencontrées dans l'état « S2 » étant propice à l'apparition d'un survirage, le système de correction de roulis selon l'invention met en oeuvre une action préventive qui consiste à asservir la vitesse de lacet du véhicule $\dot{\psi}$ sur une consigne de vitesse de lacet, comme cela sera expliqué plus en détail par la suite.

Par ailleurs, tout comme pour l'état « S1 », dans l'état « S2, le système de freinage actif du véhicule est inactif.

L'état « S3 » correspond quant à lui à un survirage avéré du véhicule, le drapeau « Flag_detection_survirage » vallant « 1 ». Dans une telle situation, le système de correction d'anti-roulis met en oeuvre une répartition maximale du couple anti-roulis sur le train avant du véhicule pour donner un caractère sous vireur à celui-ci afin de compenser le survirage.

Il est à cet effet applicable aux organes anti-roulis **12** un coefficient de report minimum $K_{ar\_min}$ , par exemple nul.

Par ailleurs, dans l'état « S3 », le freinage actif du véhicule est activé pour corriger de manière efficace le roulis. On sait en effet que les organes anti-roulis **12** ont une action limitée sur les survirages de grande ampleur. La correction de tels survirages est donc essentiellement prise en charge par le système de freinage actif, comme cela est connu en soi.

L'état « S2 » est un état temporaire pouvant conduire à l'état « S1 » consécutivement à la fin de la détection du lever de pied ou du freinage léger en virage (basculement du drapeau « flag_lever_de_pied_ou_freinage_léger_en_virage » de la valeur « 1 » à la valeur « 0 », le drapeau « Flag_detection_survirage » conservant la valeur « 0 »). Lors d'une telle transition de l'état « S2 » vers l'état « S1 », le coefficient de report de charge $K_{ar}$ appliqué aux organes anti-roulis 12 est progressivement ramené sur le coefficient de report nominal prédéterminé $Kar\_nom$.

Une transition de l'état « S2 » vers l'état « S3 » est quant à elle déclenchée dès que le drapeau « Flag_detection_survirage » bascule sur la valeur « 1 », et cela quelque soit la valeur du drapeau « flag_lever_de pied_ou_freinage_léger_en_virage » à l'instant du basculement.

De préférence, la transition inverse de l'état « S3 » vers l'état « S2 » est rendue impossible. En effet, une telle transition n'a pas de sens d'après l'historique ayant mené à l'état « S3 ». On notera à cet égard qu'un survirage ne survient qu'après une décélération dans un virage. Par contre, l'inverse n'a pas de réalité physique. A cet effet, dans l'état « S3 », le drapeau « flag_lever_de pied_ou_freinage_léger_en_virage » est réglé sur « 0 ».

Une fois le véhicule stabilisé, principalement via les actions du système de freinage actif, cette stabilité est détectée par le basculement du drapeau « Flag_detection_survirage » sur la valeur « 0 » et le superviseur **26** bascule alors dans l'état « S1 » correspondant à une situation de conduite normale.

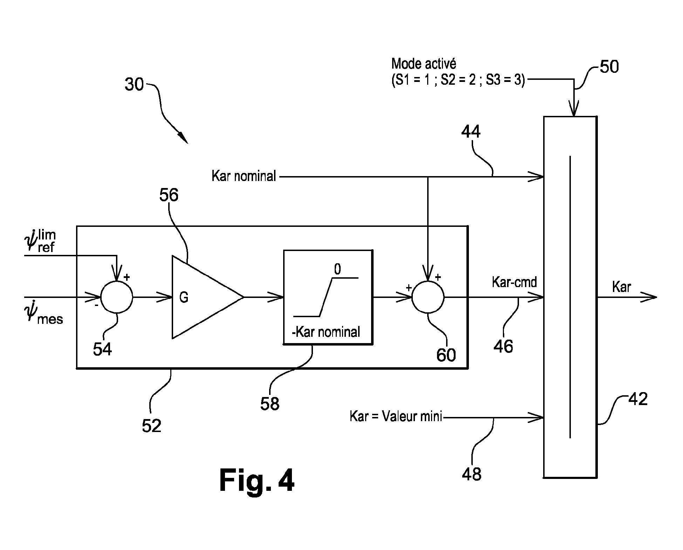

Il va maintenant être décrit, les différents calculs du coefficient de report de charge $K_{ar}$ appliqué aux organes anti-roulis **12,** correspondant aux états « S1 », « S2 » et « S3 » du superviseur **26.** La figure 4 est une vue schématique plus en détails du module **30** de calcul du coefficient de report de charge $K_{ar}$

Le module **30** comporte un sélecteur **42** recevant sur trois entrées **44, 46, 48** le coefficient de report de charge nominal $K_{ar\_nom}$, un coefficient de report calculé $K_{ar\_cmd}$ et le coefficient de report minimum $K_{ar\_min}$ respectivement. Le sélecteur **42** comporte également une entrée de sélection **50,** connectée au superviseur **26** pour recevoir le drapeau « mode_activé », et reporte sur sa sortie la valeur de l'entrée **44** lorsque le superviseur **26** est dans l'état « S1 », la valeur de l'entrée **46** lorsque le superviseur et dans l'état « S2 » et la valeur de l'entrée **48** lorsque le superviseur est dans l'état « S3 ». Le coefficient de report ainsi sélectionné en sortie du sélectionneur **42** est appliqué aux organes anti-roulis **12.**

Le module **30** de calcul comporte par ailleurs un correcteur **52** comprenant un soustracteur **54,** formant la différence entre une consigne de vitesse $\dot{\psi}_{ref}^{\lim}$ et la vitesse de lacet mesurée $\dot{\psi}_{mes}$ , un bloc **56** de commande pour asservir la vitesse de lacet $\dot{\psi}_{mes}$ sur la consigne de lacet $\dot{\psi}_{ref}^{\lim}$, comme un correcteur proportionnel par exemple, un bloc **58** saturant la commande produite par le bloc **56** entre 0 et l'opposé du coefficient de report de charge nominal $K_{ar\_nom}$ de manière à n'agir que dans le sens du sous-virage, et un additionneur **60** formant la somme entre le coefficient de report de charge nominal $K_{ar\_nom}$ et la commande saturée en sortie du bloc **58,** ladite somme constituant le report de charge calculé $K_{ar\_cmd}$ délivré sur l'entrée **46** du sélecteur **42.**

L'addition du coefficient $K_{ar\_nom}$ à la sortie du bloc **58** de saturation a pour effet de générer une commande des organes anti-roulis **12** ne présentant pas de discontinuité lorsque le mode de fonctionnement bascule de l'état « S1 », pour lequel le coefficient de report est égal à $K_{ar\_nom}$, à l'état « S2 » pour lequel le coefficient de report est calculé afin d'asservir la vitesse de lacet $\dot{\psi}$.

La consigne de vitesse $\dot{\psi}_{ref}^{\lim}$ est calculée par le module **28** de limitation (voir figure 1) qui applique une limitation de la vitesse de lacet de référence $\dot{\psi}_{ref}$. En effet, cette dernière peut se révéler dans certains cas supérieure en valeur absolue à la vitesse de lacet réelle du véhicule.

Pour éviter un tel phénomène, le module **28** de limitation calcule donc, à chaque instant, un coefficient de limitation $f_{red}$ instantané tel que :

■ si $|\dot{\psi}_{mes}|<|\dot{\psi}_{ref}|$ et si $|\dot{\psi}_{min}|<|\dot{\psi}_{ref}|$ alors $\quad f_{red} = \dfrac{|\dot{\psi}_{mes}|}{|\dot{\psi}_{ref}|}$ ;

■ sinon $f_{red} = 1$

Le module **28** moyenne le facteur de limitation instantané $f_{red}$ sur un horizon prédéterminé afin de réduire l'influence des bruits de mesure, un facteur de limitation moyenne $f_{red}^{l}$ étant ainsi obtenu à chaque instant.

Lors de la détection d'un front montant du drapeau « flag_lever_de pied_ou_freinage_léger_en_virage », la valeur du facteur de réduction moyenné $f_{red}^{l}$ à cet instant est mémorisée par le module **28** et maintenue tant que la valeur de ce drapeau est égal à « 1 ». La vitesse de lacet de référence $\dot{\psi}_{ref}$ est alors multipliée par la valeur du facteur $f_{red}^{l}$ mémorisée pour donner la consigne de vitesse de lacet $\dot{\psi}_{ref}^{\lim}$ utilisée par le correcteur **52.**

Le facteur $f_{red}^{l}$ est par ailleurs réinitialisé à « 1 » lors de la détection d'un front descendant du drapeau « flag_lever_de pied_ou_freinage_léger_en_virage ».

En variante, dans le cas où $|\dot{\psi}_{mes}|\geq|\dot{\psi}_{ref}|$, un facteur de limitation inférieur à 1 est également appliqué à la vitesse de lacet de référence $\dot{\psi}_{ref}$ pour éviter un sous virage trop important du véhicule.

Il a été décrit un mode de réalisation de l'invention dans lequel les organes anti-roulis **12** sont présents à la fois sur le train avant et sur le train arrière du véhicule.

En variante, seul le train avant est équipé d'une barre anti-roulis. Dans ce cas le couple appliqué au train avant est déterminé par la relation suivante, sans que le calcul, et donc les éléments décrits ci-dessus, ne soient modifiés :

$$C_{av} = (K_{ar} - K_{ar}^{passif}) \times M \times h \times \frac{\gamma_{t}}{K_{ar}^{passif}}$$

En variante, seul le train arrière est équipé d'une barre anti-roulis. Dans ce cas le couple appliqué au train avant est déterminé par la relation suivante, sans que le calcul, et donc les éléments décrits ci-dessus, ne soient modifiés :

$$C_{av} = (K_{ar} - K_{ar}^{passif}) \times M \times h \times \frac{\gamma_{t}}{1 - K_{ar}^{passif}}$$

Bien entendu d'autres modes de réalisation sont possibles.


**Revendications**

1. Procédé de correction du roulis d'un véhicule automobile équipé d'un organe d'anti-roulis actif associé à au moins un train du véhicule, *caractérisé* **en ce qu'**il comprend :

   ■ la surveillance de l'occurrence d'une décélération dans un virage sans survirage du véhicule ; et
   ■ en cas d'occurrence d'une telle décélération, l'asservissement de la vitesse de lacet du véhicule sur une vitesse de lacet de référence par commande de l'organe anti-roulis afin de prévenir l'apparition d'un survirage.

2. Procédé selon la revendication 1, *caractérisé* **en ce que** la surveillance de l'occurrence de la décélération dans un virage sans survirage comporte la détection d'un lever de pied de la pédale d'accélérateur du véhicule et/ou la détection d'une application d'un freinage léger.

3. Procédé selon la revendication 1 ou 2, *caractérisé* **en ce que** la surveillance de l'occurrence de décélération dans un virage sans survirage est confirmée lorsque la vitesse longitudinale du véhicule est supérieure à un seuil prédéterminé.

4. Procédé selon l'une quelconque des revendications précédentes, *caractérisé* **en ce que,** consécutivement à la détection de la décélération dans un virage sans survirage, une vitesse de lacet nominale est déterminée à partir d'un modèle de comportement latéral du véhicule en situation de roulage sans roulis, et **en ce que** la vitesse de lacet de référence est déterminée en limitant la vitesse de lacet nominale de manière à ce que la valeur absolue de celle-ci soit inférieure à la valeur absolue à la vitesse de lacet réelle du véhicule.

5. Procédé selon l'une quelconque des revendications précédente, *caractérisé* **en ce** l'asservissement de la vitesse de lacet comporte le calcul d'un premier coefficient de report de charge et le calcul d'un second coefficient de report de charge par la limitation du premier coefficient à une gamme de valeur correspondant à un sous-virage du véhicule.

6. Procédé selon la revendication 5, *caractérisé* **en ce que** l'asservissement de la vitesse de lacet est initialisé par un coefficient de report de charge à erreur nulle.

7. Procédé selon l'une quelconque des revendications précédentes, *caractérisé* **en ce qu'**il comporte :

   ■ la surveillance de l'occurrence d'un survirage du véhicule ; et
   ■ dans le cas d'un survirage, l'inactivation de l'asservissement de la vitesse de lacet au moyen de l'organe d'anti-roulis et l'application d'une répartition maximale de la charge sur le train avant.

8. Système de correction du roulis d'un véhicule automobile équipé d'un organe d'anti-roulis actif (12) associé à au moins un train du véhicule, *caractérisé* **en ce qu'**il comprend :

   ■ des moyens (24) de surveillance de l'occurrence d'une décélération dans un virage sans survirage du véhicule ; et
   ■ des moyens (30) d'asservissement de la vitesse de lacet du véhicule sur une vitesse de lacet de référence par commande de l'organe d'anti-roulis afin de prévenir l'apparition d'un survirage, lesdits moyens d'asservissement étant activés en cas d'occurrence d'une telle décélération.

9. Système selon la revendication 8, *caractérisé* **en ce qu'**il est apte à mettre en oeuvre un procédé conforme à l'une quelconque des revendications 2 à 7.

Fig. 1

**Fig. 2**

**Fig. 3**

**Fig. 4**

Europäisches
Patentamt

European
Patent Office

Office européen
des brevets

# RAPPORT DE RECHERCHE EUROPEENNE

Numéro de la demande

EP 09 30 5643

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 0 827 852 A (FORD GLOBAL TECH INC [US]) 11 mars 1998 (1998-03-11) * colonne 3, ligne 5 - colonne 4, ligne 49; figures 1,2 * ----- | 1-9 | INV. B60G17/016 B60G17/0195 B60G21/00 B60W10/22 B60W10/18 B60W10/04 |
| Y | WO 2006/037678 A (DAIMLER CHRYSLER AG [DE]; KALKKUHL JENS [DE]; MOSER MARTIN [DE]; RAU M) 13 avril 2006 (2006-04-13) * page 8, ligne 24 - page 19, ligne 21 * * figures 1,3 * ----- | 1-9 | |
| Y | JP 11 147411 A (ATSUGI UNISIA CORP) 2 juin 1999 (1999-06-02) * abrégé * ----- | 1-9 | |
| Y | US 2002/013645 A1 (BADENOCH SCOTT WILSON [US]) 31 janvier 2002 (2002-01-31) * alinéas [0010] - [0022]; figures 1,2 * ----- | 1-9 | |
| A | US 2007/112497 A1 (MIURA TAKAMI [JP] ET AL) 17 mai 2007 (2007-05-17) * le document en entier * ----- | 1 | DOMAINES TECHNIQUES RECHERCHES (IPC) B60G B60W |
| A | DE 196 37 193 A1 (HONDA MOTOR CO LTD [JP]) 27 mars 1997 (1997-03-27) * le document en entier * ----- | 1 | |

Le présent rapport a été établi pour toutes les revendications

| Lieu de la recherche | Date d'achèvement de la recherche | Examinateur |
|---|---|---|
| Munich | 1 octobre 2009 | Granier, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 2 141 036 A1**

## ANNEXE AU RAPPORT DE RECHERCHE EUROPEENNE
## RELATIF A LA DEMANDE DE BREVET EUROPEEN NO.

EP 09 30 5643

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2009

| Document brevet cité au rapport de recherche | | Date de publication | Membre(s) de la famille de brevet(s) | | Date de publication |
|---|---|---|---|---|---|
| EP 0827852 | A | 11-03-1998 | DE 69713694 D1<br>DE 69713694 T2<br>US 5948027 A | | 08-08-2002<br>31-10-2002<br>07-09-1999 |
| WO 2006037678 | A | 13-04-2006 | DE 102004047860 A1 | | 20-04-2006 |
| JP 11147411 | A | 02-06-1999 | JP 3963195 B2 | | 22-08-2007 |
| US 2002013645 | A1 | 31-01-2002 | AUCUN | | |
| US 2007112497 | A1 | 17-05-2007 | DE 102006053107 A1<br>JP 2007131229 A | | 24-05-2007<br>31-05-2007 |
| DE 19637193 | A1 | 27-03-1997 | CA 2186444 A1<br>CN 1150568 A<br>US 6076033 A | | 27-03-1997<br>28-05-1997<br>13-06-2000 |

EPO FORM P0460

Pour tout renseignement concernant cette annexe : voir Journal Officiel de l'Office européen des brevets, No.12/82

**EP 2 141 036 A1**